# EUROPEAN PATENT SPECIFICATION

(11) **EP 3 461 774 B1**
(45) Date of publication and mention of the grant of the patent: **22.07.2020**
(21) Application number: 18194849.8
(22) Date of filing: 17.09.2018
(51) Int. Cl.: B65H 67/06, B65G 47/68

(54) **BOBBIN LOADER DEVICE, EQUIPPED WITH DILUTION MEANS, FOR TEXTILE MACHINES AND RELATIVE TEXTILE MACHINE**
SPULENLADEVORRICHTUNG MIT VERDÜNNUNGSMITTELN FÜR TEXTILMASCHINEN UND ENTSPRECHENDE TEXTILMASCHINE
DISPOSITIF CHARGEUR DE BOBINE, ÉQUIPÉ DE MOYENS DE DILUTION, POUR MACHINES TEXTILES ET MACHINE TEXTILE ASSOCIÉE

(30) Priority: 29.09.2017 IT 201700109586
(43) Date of publication of application: 03.04.2019
(73) Proprietor: Savio Macchine Tessili S.p.A., 33170 Pordenone (IT)
(72) Inventor: COLOMBEROTTO, Giorgio, I-33170 PORDENONE (IT); MORINI, Giuseppe, I-33170 PORDENONE (IT); MONACO, Ernesto, I-33170 PORDENONE (IT)
(74) Representative: Mitola, Marco

(56) References cited:
- EP-A2- 1 972 589
- DE-A1- 1 918 627
- DE-A1- 2 219 911
- DE-A1- 2 421 049
- DE-A1- 3 045 824
- DE-A1- 3 334 873
- JP-A- H08 337 317
- JP-U- S5 034 548

## Description

### FIELD OF APPLICATION

The present invention relates to a bobbin loader device, equipped with dilution means, for textile machines and relative textile machine comprising said bobbin loader device.

### BACKGROUND ART

As is known, in textile machines, the bobbins, comprising a coil around which the yarn is wound, must be fed to a classifier, typically a vibrating nut, to be then sent to further machines for subsequent processing, such as, for example, winding, dyeing and the like.

The bobbins, contained in bulk in a tipper, are overturned in the classifier which has the function of ordering them as well as orienting them correctly so that they can be effectively sent to following stages of the textile machine, for subsequent processing. JP H08 337317 A discloses a bobbin loader device according to the preamble of claim 1.

In the known solutions, it is not infrequent that the classifier becomes clogged precisely because the bobbins are overturned in bulk and quickly, whereby the classifier is not always capable of performing the task thereof.

Furthermore, the bobbins obviously have ends which, when the bobbins are overturned, tend to unwind more and more and to mutually tangle.

Thereby, the ends intertwine and the bobbins tend to mutually get together creating even rather voluminous bobbin groupings, which inevitably clog the classifier, making it ineffective.

To date, in the event of clogging the classifier, the manual intervention of an operator and the stopping of the procedure are required.

All this leads to an increase of time and therefore of processing costs. Furthermore, it also requires the presence of an operator while, usually, it should be a completely automated operation without the contribution of manual input.

It follows that the feed speeds of the bobbins in the classifier are known to be reduced, so as to avoid or reduce as much as possible the phenomenon of clogging of the classifier. Thereby, however, the overall efficiency of the system is reduced.

### PRESENTATION OF THE INVENTION

Therefore, the known solutions described above have drawbacks and limitations, essentially due to the fact that they can not avoid the phenomenon of clogging the bobbins in the classifier, if not by reducing the feed speed and therefore the overall efficiency of the system.

Nevertheless, even at low speed, it is not possible to limit the phenomenon of clustering the bobbins, but not even the one of the tangling of the respective ends which, mutually intertwining, form clusters which inevitably clog the classifier.

Therefore, the known solutions require, if need be, the manual intervention of an operator to manage and untangle the clogging of the classifiers, which continues to occur.

Therefore, the need to resolve the aforesaid drawbacks and limitations with reference to the background art is felt.

Such need is met by a bobbin loader device equipped with dilution means in accordance with claim 1.

### DESCRIPTION OF THE DRAWINGS

Further features and advantages of the present invention will become more apparent from the following description of the indicative and non-limiting embodiments thereof, in which:

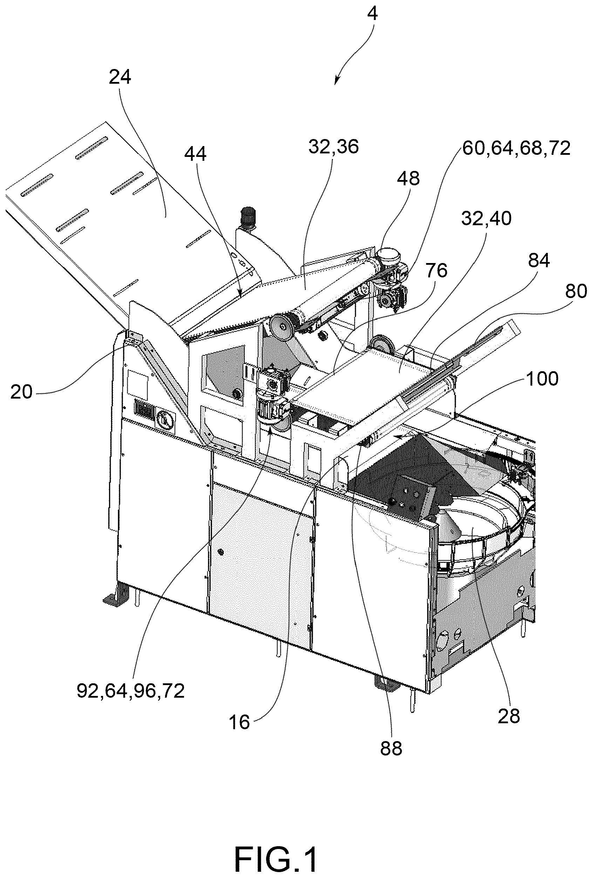

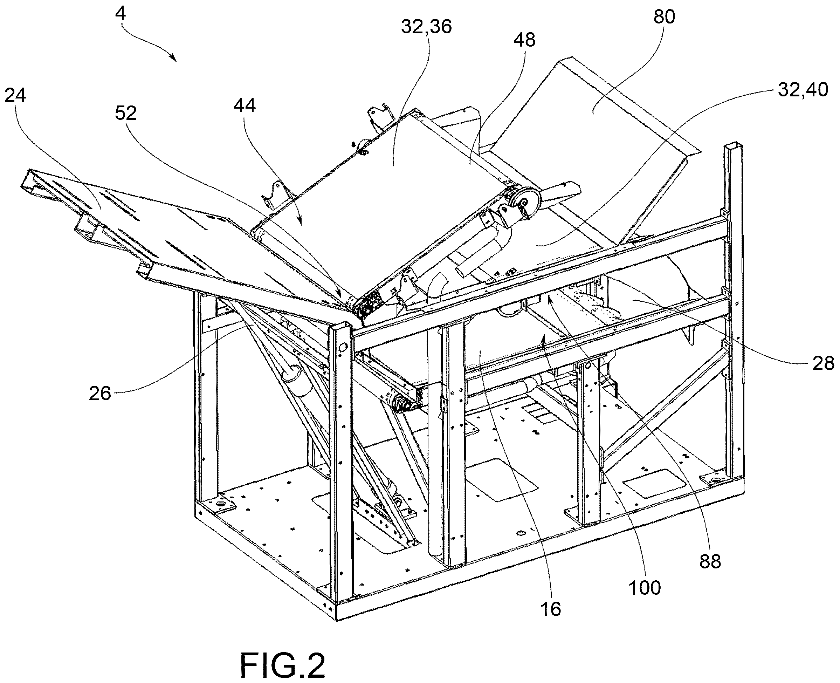

Figures 1-2 show, from different angles, perspective views of a bobbin loader device in accordance with an embodiment of the present invention;

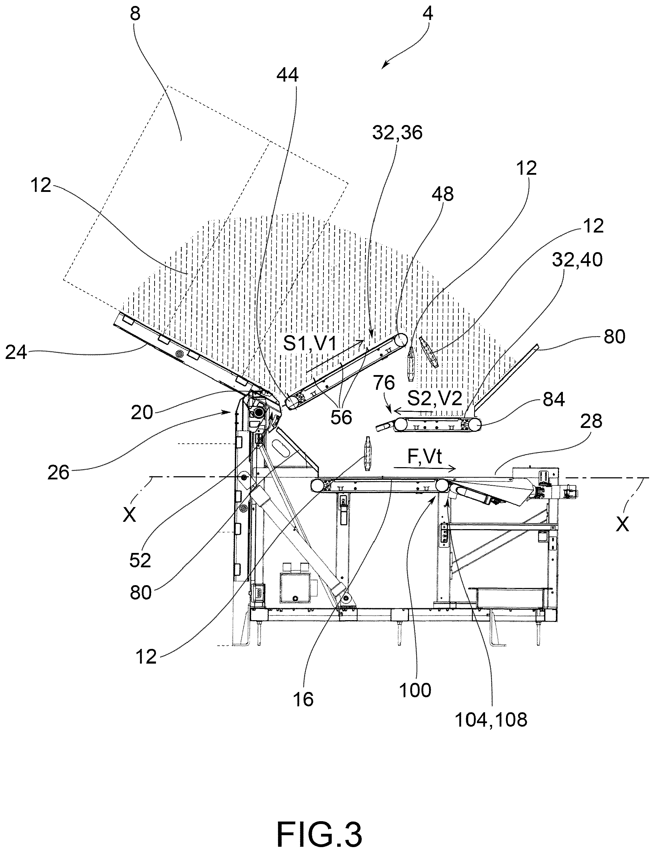

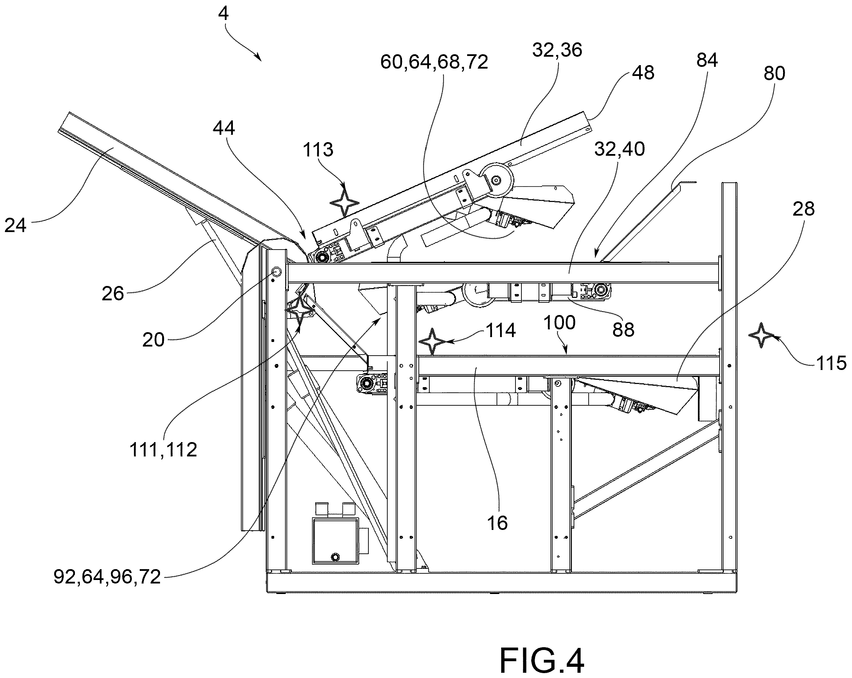

Figures 3-4 show side views of a bobbin loader device in accordance with the present invention;

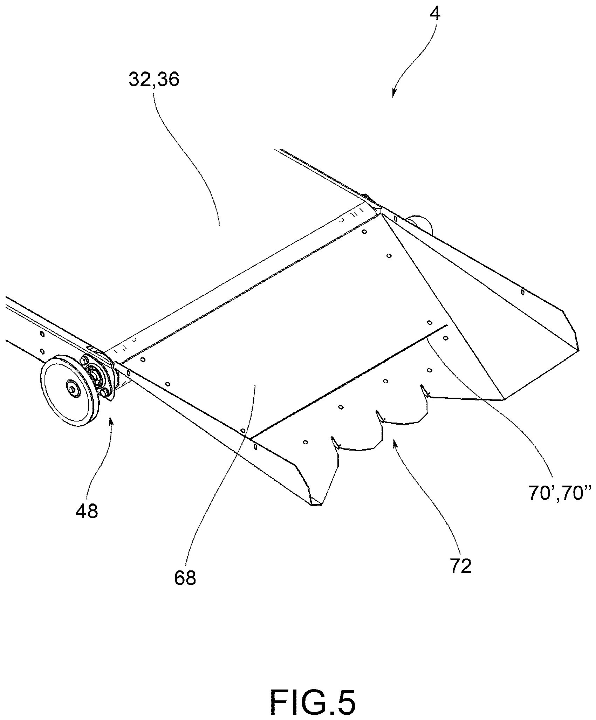

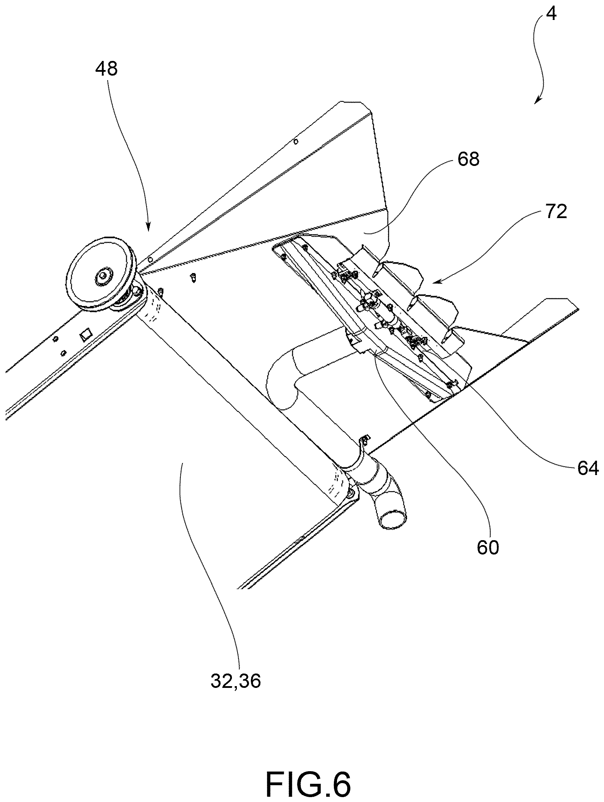

Figures 5-6 show, respectively from above and from below, perspective views of a detail of the bobbin loader device in accordance with an embodiment of the present invention;

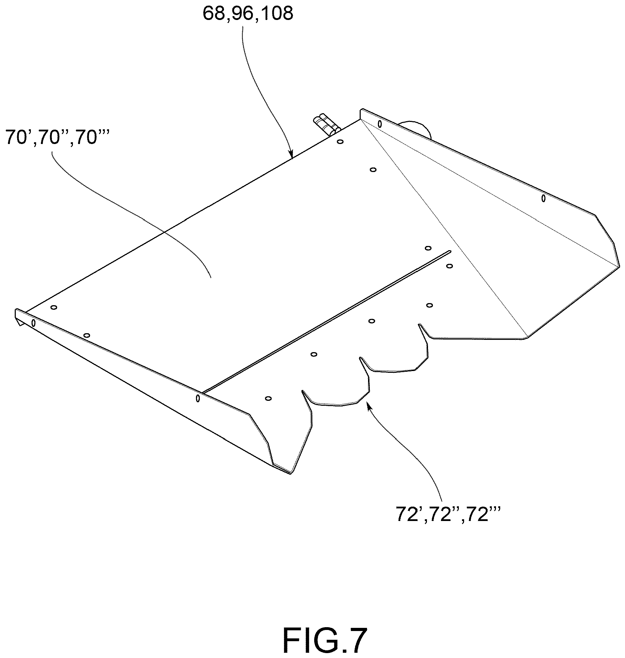

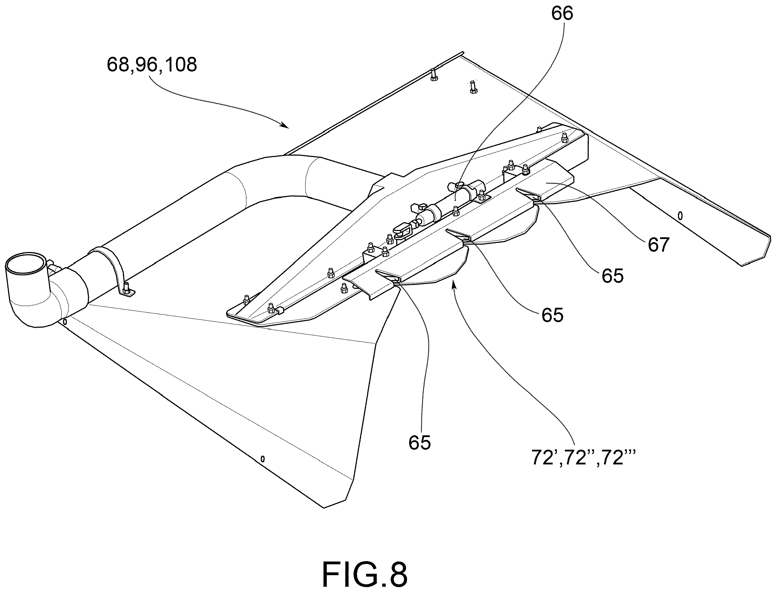

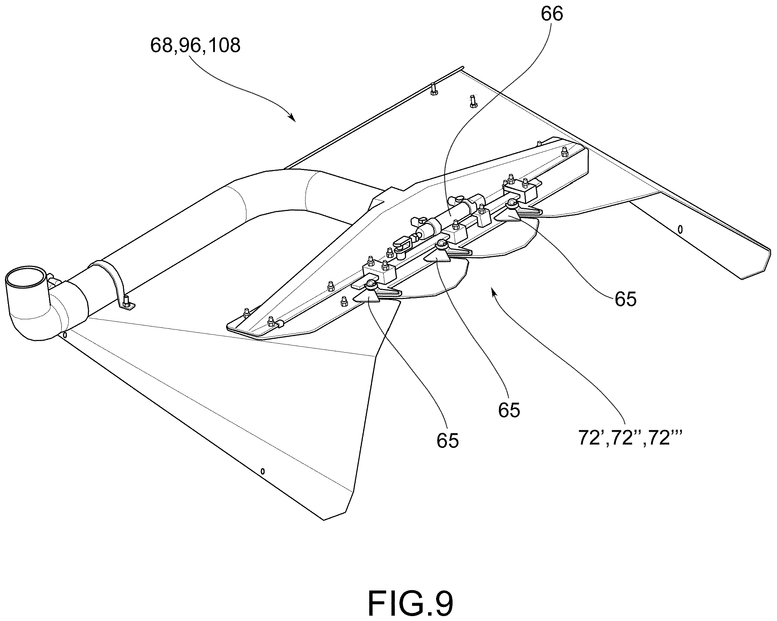

Figures 7-9 show, from different angles and with some parts omitted, perspective views of a chute in accordance with an embodiment of the present invention.

The common elements, or parts of elements, between the embodiments described below will be indicated with the same reference numeral.

### DETAILED DESCRIPTION

With reference to the aforesaid figures, an overall diagrammatic view of a bobbin loader device for textile machines has been generally indicated with 4.

In particular, the bobbin loader device 4 comprises a tipper 8 containing a plurality of bobbins 12.

The bobbins 12 may be of various shape and size; for the purposes of the present invention it does not even detect the type of yarn wound on the bobbins themselves.

Said bobbins 12 shall be classified to be sent, typically, to a coiling station (not shown).

The bobbin loader device 4 further comprises a belt conveyor 16 placed below the tipper 8 so as to receive the bobbins 12 falling from the tipper 8 and send them in a feed direction X-X according to a feed orientation F and a determined feed speed Vf.

The tipper 8 is preferably hinged about at least one pin 20 or, in any case, it is supported by a shelf 24 tilting about said at least one pin 20, so as, if need be, to be overturned to allow the bobbins 12 contained therein to be unloaded.

Said movement may be obtained by means of tipping means 26 operatively connected to the tipper itself.

The bobbin loader device 4 further comprises a classifier carousel 28 suitable to classify the bobbins 12, i.e., to arrange the bobbins 12 according to a predetermined position so as to be easily drawn and subjected to subsequent processing in other following stations.

The classifier carousel 28 is arranged downstream the belt conveyor 16 so as to receive from the latter the bobbins 12 to be classified.

The bobbin loader device 4 comprises, between the tipper 8 and the belt conveyor 16, dilution means 32 suitable to divide and space the bobbins 12 coming from the tipper 8 from each other, before sending them to said belt conveyor 16.

Said dilution means 32 comprise a first conveyor belt 36 arranged below the tipper 8 so as to receive the bobbins 12 falling from it, having a first advancement orientation S1 concordant with the feed orientation F and a first advancement speed V1.

In other words, the first conveyor belt 36 shifts at a first advancement speed V1 according to first advancement orientation S1 concordant with the feed orientation F.

The dilution means 32 further comprise a second conveyor belt 40 arranged between the first conveyor belt 36 and the belt conveyor 16, so as to receive the bobbins falling from the first conveyor belt 36 and channel them onto the belt conveyor 16.

The second conveyor belt 40 has a second advancement orientation S2, opposite to the feed orientation F and to the first advancement orientation S1, and shifts at a second advancement speed V2.

In other words, the second conveyor belt 40 counterrotates with respect to the first conveyor belt 36 and to the belt conveyor 16.

Preferably, the first advancement speed V1, the second advancement speed V2 and the feed speed Vf are gradually increasing, regardless of the respective directions which, as seen, are inverted from time to time.

In other words, the conveyor belts 36, 40 and the belt conveyor 16 are operated so that the condition for which V1<V2<Vf is verified.

Preferably, said speeds are gradually increasing from one to another by a rate of between 20% and 40%.

Even more preferably, said rate is 30%.

Such incremental sequence of the speeds is useful so as to allow the dilution of the bobbins 12, preventing the congestion thereof, typical of background art solutions.

Purely by way of indication, according to a possible embodiment, the first advancement speed V1 is 2.1 m/s, la second advancement speed V2 is 2.6 m/s, while the feed speed Vf is 3.5 m/s.

For example, the conveyor belts 36, 40 and the belt conveyor 16 are operated by separate motor means (not shown).

The use of separate motor means allows to more easily modify the single advancement speeds of the belts according to the actual and contingent working conditions of the bobbin loader device 4 so as to prevent any congestion of the classifier carousel 28 and, at the same time, to speed up the classification step of the bobbins 12 as much as possible.

Preferably, the first conveyor belt 36 is tilted upwards, having a first end 44 lowered, facing the tipper 8, and a second end 48 raised, opposite to the first lowered end 44.

The tilted configuration of the first conveyor belt helps obtaining the correct dilution of the bobbins 12, preventing them from falling uncontrollably and from clogging the classifier carousel 28.

For example, the first conveyor belt 36 may be equipped with first tilting means 52 suitable to change the inclination thereof with respect to the belt conveyor 16.

For example, the first conveyor belt 36 identifies with the belt conveyor 16 an angle of between 15 and 40 degrees.

The conveyor belts 36, 40 and/or the belt conveyor 16 are equipped with a rubber coating so as to increase the coefficient of friction with the bobbins 12 and to facilitate the transport and/or lifting thereof.

According to an embodiment, the first conveyor belt 36 is equipped with stepped lugs 56 (also called flights) to facilitate the lifting of the bobbins 12 falling from the tipper 8. Said stepped lugs 56 facilitate the lifting of the bobbins 12 along the first conveyor belt 36, as shown, tilted upwards, and also facilitate the separation of the bobbins 12 themselves, preventing them as much as possible from amassing.

According to a possible embodiment, at the second end 48 of the first conveyor belt 36, opposite to the tipper 8, a first suction nozzle 60 is placed, equipped with a scissor unit 64. The scissor unit 64 may comprise one or more blades 65 configured, for example, so as to shift along a transverse direction Y-Y, substantially perpendicular to the feed direction X-X. The blades 65 are, for example, at individual actuator means 66 capable of moving the blades to allow the cutting of the ends.

Preferably, said blades 65 are at least partially covered by a side wall 67.

The first suction nozzle 60 is configured to aspirate unwound ends of the falling bobbins 12 and enable the cutting thereof by said scissor unit 64.

For example, said first suction nozzle 60 is placed on a first chute 68 located adjacent to the second end 48 of the first conveyor belt 36.

Preferably, the first chute 68 is fitted with a first slot 70' and with a first notched profile 72' configured to facilitate the gripping of possible unwound ends of the bobbins 12. Preferably, the first slot 70' almost extends for the transverse extension of the first chute 68 so as to ensure the aspiration of the possible end, irrespective of the point of passage of the bobbin 12 on the chute itself.

The first slot 70' is in fluid connection with the first suction nozzle 60 which is located on a rear side of the first chute 68, i.e., under the chute itself. Thereby, while the bobbin 12 rolls along the first chute 68, the end thereof, by rolling, faces said first slot 70' so as to be aspirated into the first suction nozzle 60 located under the first chute 68. When, a moment afterwards, the same bobbin 12 reaches the first notched profile 72', the end reaches the scissor unit 64 which cuts it.

Thereby, the free segment of the end of the bobbin is considerably reduced already before it reaches the second conveyor belt 40.

The second conveyor belt 40 is arranged so as to be aligned with the second end 48 of the first conveyor belt 36 from which the bobbins 12 fall, so as to catch the bobbins 12 falling from the first conveyor belt 36 and channel them towards an output end 76 thereof.

The second conveyor belt 40 is equipped with at least one guard 80, placed on the side of an input end 84 thereof, opposite with respect to the second advancement orientation S2, as well as opposite to the output end 76.

According to a possible embodiment, the second conveyor belt 40 is equipped with second tilting means 88 suitable to change the inclination thereof with respect to the belt conveyor 16.

According to an embodiment, at said output end 76 of the second conveyor belt 40, a second suction nozzle 92 is placed, facing the tipper 8, equipped with a scissor unit 64.

The second suction nozzle 92 is configured to aspirate possible unwound ends of the falling bobbins 12 and enable the cutting thereof by said scissor unit 44.

Preferably, the second suction nozzle 92 is placed onto a second chute 96 arranged adjacent to the output end 76 of the second conveyor belt 40. Preferably, the second chute 96 is fitted with a second slot 70" and with a second notched profile 72" configured to facilitate the gripping of possible unwound ends of the bobbins 12. Preferably, the second slot 70" almost extends for the transverse extension of the second chute 96 so as to ensure the aspiration of the possible end, irrespective of the point of passage of the bobbin 12 on the chute itself.

The second slot 70" is in fluid connection with the second suction nozzle 92 which is located on a rear side of the second chute 96, i.e., under the chute itself. Thereby, while the bobbin 12 rolls along the second chute 96, the end thereof, by rolling, faces said second slot 70" so as to be aspirated into the second suction nozzle 92 located under the second chute 96. When, a moment afterwards, the same bobbin 12 reaches the second notched profile 72", the end reaches the scissor unit 64 which cuts it.

Thereby, the free segment of the end of the bobbin 12 is considerably reduced already before it reaches the belt conveyor 16.

The belt conveyor 16 is placed so as to be aligned with the output end 76 of the second conveyor belt 40 concordant with the second advancement orientation S2, so as to receive the falling bobbins 12 from said output end 76.

Preferably, also the belt conveyor 16 is equipped with a guard 80 arranged near the falling point of the bobbins 12 coming from the second conveyor belt 40.

According to an embodiment, at a feed end 100 of the belt conveyor 16, a third suction nozzle 104 is placed, equipped with a scissor unit 64, said third suction nozzle 104 being configured to aspirate unwound ends of the falling bobbins 12 and enable the cutting thereof by said scissor unit 64.

For example, the third suction nozzle 104 is placed onto a third chute 108 placed adjacent to the feed end 100 of the belt conveyor 16.

Preferably, the third chute 108 is equipped with a notched profile 72 to facilitate the gripping of the unwound ends of the bobbins 12.

Preferably, the third chute 108 is fitted with a third slot 70''' and with a third notched profile 72"' configured to facilitate the gripping of possible unwound ends of the bobbins 12. Preferably, the third slot 70"' almost extends for the transverse extension of the third chute 108 so as to ensure the aspiration of the possible end, irrespective of the point of passage of the bobbin 12 on the chute itself.

The third slot 70''' is in fluid connection with the third suction nozzle 104 which is located on a rear side of the third chute 108, i.e., under the chute itself. Thereby, while the bobbin 12 rolls along the third chute 108, the end thereof, by rolling, faces said third slot 70''' so as to be aspirated into the third suction nozzle 104 located under the third chute 108. When, a moment afterwards, the same bobbin 12 reaches the third notched profile 72''', the end reaches the scissor unit 64 which cuts it.

Thereby, the free segment of the end of the bobbin is considerably reduced already before it reaches the classifier carousel 28.

Therefore, as described, the bobbin 12, when passing on each conveyor belt 36, 40 or belt conveyor 16, is separated as much as possible from the other bobbins and classified, so as to avoid the clustering of bobbins 12. Furthermore, before leaving each conveyor belt 36, 40 or belt conveyor 16, the bobbin 12 is subjected to the aspiration and cutting of any possible free end: thereby, further risks and the possibility of the bobbins 12 tangling are avoided, before they are sent to the classifier carousel 28.

Therefore, the redundancy of conveyor belts 36, 40 and belt conveyors 16 dilutes and separates the bobbins 12 from each other as much as possible.

Furthermore, the redundancy of suction nozzles 60, 92, 104, of slots 70', 70", 70"' and of notched profiles 72', 72", 72''' with relative scissor units 64 (each equipped with respective blades 65 and actuator means 66) allows to cut each time the ends possibly unwound from the bobbins 12, preventing them from entwining and creating tangles of ends as well as groupings of bobbins.

The bobbin loader device 4 is preferably equipped with sensors 110 for the actuation and/or movement and tilting of the tipper 8, of the first conveyor belt 36, of the second conveyor belt 40 and of the belt conveyor 16.

Said sensors 110 are operatively connected to a control unit of the bobbin loader device 4.

Thereby, the control unit is capable of managing the operation of the various accessories of the bobbin loader device 4 so as to optimize the operation thereof according to the actual load of bobbins 12 to be classified, so as to prevent any form of clogging of the classifier carousel 28.

According to an embodiment, said sensors 110 comprise a first and a second sensor 111, 112 which provide consent to the tipping means 26 both for the start and for the end of the overturning step of the tipper 8.

Furthermore, a third sensor 113 is provided for which provides consent for the overturning step so as to load the bobbins 12 on the first conveyor belt 36.

Furthermore, a fourth sensor 114 is provided for which provides consent for the actuation of the first and of the second conveyor belt 36, 40 so as to feed the belt conveyor 16.

Finally, a fifth sensor 115 is also provided for which provides consent for the actuation of the belt conveyor 16 so as to feed the classifier carousel 28.

As it may be appreciated from the foregoing, the bobbin loader device in accordance with the invention allows to overcome the drawbacks presented in the background art.

Advantageously, the solution of the present invention allows to classify the bobbins coming from the overturning of the tipper without the risk of clogging the classifier.

In fact, the bobbins are priorly differentiated by means of the conveyor belts before being introduced into the final classifier, which therefore will not be subject to clogging.

Following each step of differentiating the bobbins, a step of cutting the ends of the bobbins is also advantageously carried out, so as to prevent the same from tangling with one another, creating clusters of bobbins which would clog the classifier carousel.

Furthermore, the step of differentiating the bobbins occurs without this reducing the overall feed speed of the bobbins to the final classifier and, therefore, without minimally reducing the overall efficiency of the system.

Furthermore, the manual intervention of an operator is not required and therefore the operating costs of the system are reduced.

Furthermore, the arrangement of the feed belts is such that the overall longitudinal dimensions of the apparatus, i.e., the dimensions with respect to the advancement and feed direction of the bobbins, are not increased. In fact, the at least partially overlapping arrangement of the belt conveyors allows to recover the height space.

In order to meet contingent and specific needs, several changes and variations to the bobbin loader devices equipped with a diluter according to the present invention may be introduced by those skilled in the art without departing from the scope of the invention as defined by the following claims.

## Claims

1. Bobbin loader device (4) for textile machines comprising
- a tipper (8) containing a plurality of bobbins (12),
- a belt conveyor (16) placed below the tipper (8) in order to receive the bobbins (12) falling from the tipper (8) and send them in a feed direction (X-X) according to a feed orientation (F) and a feed speed (Vf)
- a classifier carousel (28) suitable to classify the bobbins (12), said classifier carousel (28) being placed downstream of the belt conveyor (16) in order to receive from the latter the bobbins (12) to be classified,
- wherein the bobbin loader device (4) comprises between the tipper (8) and the belt conveyor (16), dilution means (32) suitable to divide and space the bobbins (12) coming from the tipper (8) from each other, before sending them to said belt conveyor (16), wherein said dilution means (32) comprise a first conveyor belt (36) placed below the tipper (8) in order to receive the bobbins (12) falling from it, having a first advancement orientation (S1) concordant with the feed orientation (F) and a first advancement speed (V1), **characterized in that** said dilution means (32) further comprise a second conveyor belt (40) placed between the first conveyor belt (36) and the belt conveyor (16) in order to receive the bobbins (12) falling from the first conveyor belt (36) and channel them onto the belt conveyor (16), wherein the second conveyor belt (40) has a second advancement orientation (S2), opposite the feed orientation (F), and a second advancement speed (V2).

2. Bobbin loader device (4) according to claim 1, wherein the first advancement speed (V1), the second advancement speed (V2) and the feed speed (Vf) are gradually increasing.

3. Bobbin loader device (4) according to claim 2, wherein said speeds (V1, V2, Vf) are gradually increasing from one to another by a rate of between 20% and 40%.

4. Bobbin loader device (4) according to claim 2 or 3, wherein said rate is 30%.

5. Bobbin loader device (4) according to any of the claims from 1 to 4, wherein said conveyor belts (36,40) and belt conveyor (16) are driven by separate motor means.

6. Bobbin loader device (4) according to any of the claims from 1 to 5, wherein said conveyor belts (36,40) and/or belt conveyor (16) are equipped with a rubber coating.

7. Bobbin loader device (4) according to any of the claims from 1 to 6, in which the first conveyor belt (36) is tilted upwards, having a first end (44) lowered, facing the tipper (8), and a second end (48) raised, opposite the first lowered end (44).

8. Bobbin loader device (4) according to any of the claims from 1 to 7, wherein said first conveyor belt (36) has first tilting means (52) suitable to change its inclination with respect to the belt conveyor (16).

9. Bobbin loader device (4) according to any of the claims from 1 to 8, wherein the first conveyor belt (36) has stepped lugs (56) in order to facilitate the lifting of the bobbins (12) falling from the tipper (8).

10. Bobbin loader device (4) according to any of the claims from 1 to 9, wherein, at a second end (48) of the first conveyor belt (36), opposite the tipper (8) a first suction nozzle (60) is placed equipped with a scissor unit (64), said first suction nozzle (60) being configured to aspirate unwound ends of the falling bobbins (12) and enable their cutting by said scissor unit (64).

11. Bobbin loader device (4) according to claim 10, wherein the first suction nozzle (60) is placed on a first chute (68) located adjacent to the second end (48) of the first conveyor belt (36).

12. Bobbin loader device (4) according to claim 11, wherein the first chute (68) is equipped with a first notched profile (72') to facilitate gripping of the unwound ends of the bobbins (12).

13. Bobbin loader device (4) according to any of the claims from 1 to 12, wherein the second conveyor belt (40) is arranged so as to be aligned with a second end (48) of the first conveyor belt (36) from which the bobbins (12) fall, so as to catch the bobbins (12) falling from the first conveyor belt (36) and channel them towards an output end (76) thereof.

14. Bobbin loader device (4) according to any of the claims from 1 to 13, wherein the second conveyor belt (40) is equipped with at least one guard (80), placed on the side of an input end (84) opposite the second advancement orientation (S2).

15. Bobbin loader device (4) according to any of the claims from 1 to 14, wherein the second conveyor belt (40) is fitted with second tilting means (88) suitable to change its inclination with respect to the belt conveyor (16) .

16. Bobbin loader device (4) according to any of the claims from 1 to 15, where at an output end (76) of the second conveyor belt (40), facing the tipper (8) a second suction nozzle (92) is placed fitted with a scissor unit (64), said second suction nozzle (92) being configured to aspirate unwound ends of the falling bobbins (12) and enable their cutting by the scissor unit (64).

17. Bobbin loader device (4) according to claim 16, wherein the second suction nozzle (92) is placed on a second chute (96) located adjacent to the output end (76) of the second conveyor belt (40).

18. Bobbin loader device (4) according to claim 17, wherein the second chute (96) is equipped with a second notched profile (72") to facilitate gripping of the unwound ends of the bobbins (12).

19. Bobbin loader device (4) according to any of the claims from 1 to 18, wherein the belt conveyor (16) is arranged so as to be aligned with an output end (76) of the second conveyor belt (40) concordant with the second advancement orientation (S2), so as to receive the falling bobbins (12) from said output end (76).

20. Bobbin loader device (4) according to any of the claims from 1 to 19, wherein the belt conveyor (16) is equipped with a guard (80) placed near the falling point of the bobbins (12) from the second conveyor belt (40).

21. Bobbin loader device (4) according to any of the claims from 1 to 20, wherein at a feed end (100) of the belt conveyor (16), a third suction nozzle (104) is placed fitted with a scissor unit (64), said third suction nozzle (104) being configured to aspirate unwound ends of the falling bobbins (12) and enable their cutting by the scissor unit (64).

22. Bobbin loader device (4) according to claim 21, wherein said third suction nozzle (104) is placed on a third chute (108) located adjacent to the feed end (100) of the belt conveyor (16).

23. Bobbin loader device (4) according to claim 22, wherein the third chute (108) is equipped with a third notched profile (72''') to facilitate gripping of the unwound ends of the bobbins (12).

24. Bobbin loader device (4) according to any of the claims from 1 to 23, wherein the device (4) is equipped with sensors (110) for the actuation and/or movement and tilting of the tipper (8), of the first conveyor belt (36), of the second conveyor belt (40) and of the belt conveyor (16), said sensors (110) being operatively connected to a control unit of the device (4).

25. Textile machine comprising a bobbin loader device (4) according to any of the claims from 1 to 24.

## Patentansprüche

1. Spulenladevorrichtung (4) für Textilmaschinen, Folgendes umfassend:
- einen Kipper (8), der eine Vielzahl von Spulen (12) beinhaltet,
- einen Bandförderer (16), der unter dem Kipper (8) platziert ist, um die Spulen (12) aufzunehmen, die aus dem Kipper (8) fallen, und um sie gemäß einer Zufuhrausrichtung (F) und einer Zufuhrgeschwindigkeit (Vf) in eine Zufuhrrichtung (X-X) zu schicken,
- ein Klassifiziererkarussell (28), das geeignet ist, die Spulen (12) zu klassifizieren, wobei das Klassifiziererkarussell (28) dem Bandförderer (16) nachgeschaltet platziert ist, sodass es vom Letzteren die zu klassifizierenden Spulen (12) empfängt,
- wobei die Spulenladevorrichtung (4) zwischen dem Kipper (8) und dem Bandförderer (16) ein Verdünnungsmittel (32) umfasst, das geeignet ist, die Spulen (12), die von dem Kipper (8) kommen, voneinander zu trennen und zu beabstanden, bevor sie zum Bandförderer (16) geschickt werden,
wobei das Verdünnungsmittel (32) ein erstes Förderband (36) umfasst, das unter dem Kipper (8) platziert ist, um die Spulen (12), die aus ihm fallen, aufzunehmen, und das eine erste Vorschubausrichtung (S1), die mit der Zufuhrausrichtung (F) übereinstimmt, und eine erste Vorschubgeschwindigkeit (V1) aufweist, **dadurch gekennzeichnet, dass** das Verdünnungsmittel (32) ferner umfasst:
ein zweites Förderband (40), das zwischen dem ersten Förderband (36) und dem Bandförderer (16) platziert ist, um die Spulen (12) aufzunehmen, die vom ersten Förderband (36) fallen, und sie auf den Bandförderer (16) zu leiten, wobei das zweite Förderband (40) eine zweite Vorschubausrichtung (S2), die der Zufuhrausrichtung (F) entgegengesetzt ist, und eine zweite Vorschubgeschwindigkeit (V2) aufweist.

2. Spulenladevorrichtung (4) nach Anspruch 1, wobei die erste Vorschubgeschwindigkeit (V1), die zweite Vorschubgeschwindigkeit (V2) und die Zufuhrgeschwindigkeit (Vf) schrittweise steigen.

3. Spulenladevorrichtung (4) nach Anspruch 2, wobei die Geschwindigkeiten (V1, V2, Vf) von der einen zur nächsten schrittweise mit einer Rate zwischen 20 % und 40 % ansteigen.

4. Spulenladevorrichtung (4) nach Anspruch 2 oder 3, wobei diese Rate 30 % beträgt.

5. Spulenladevorrichtung (4) nach einem beliebigen der Ansprüche 1 bis 4, wobei die Förderbänder (36, 40) und der Bandförderer (16) durch separate Motormittel angetrieben werden.

6. Spulenladevorrichtung (4) nach einem beliebigen der Ansprüche 1 bis 5, wobei die Förderbänder (36, 40) und/oder der Bandförderer (16) mit einer Gummibeschichtung ausgestattet sind.

7. Spulenladevorrichtung (4) nach einem beliebigen der Ansprüche 1 bis 6, in der das erste Förderband (36) aufwärts geneigt ist, wobei ein erstes Ende (44), das dem Kipper (8) zugewandt ist, abgesenkt ist und ein zweites Ende (48) gegenüber dem ersten abgesenkten Ende (44) erhöht ist.

8. Spulenladevorrichtung (4) nach einem beliebigen der Ansprüche 1 bis 7, wobei das erste Förderband (36) erste Kippmittel (52) aufweist, die geeignet sind, seine Neigung in Bezug auf den Bandförderer (16) zu ändern.

9. Spulenladevorrichtung (4) nach einem beliebigen der Ansprüche 1 bis 8, wobei das erste Förderband (36) gestufte Vorsprünge (56) aufweist, um das Anheben der Spulen (12), die vom Kipper (8) fallen, zu erleichtern.

10. Spulenladevorrichtung (4) nach einem beliebigen der Ansprüche 1 bis 9, wobei, an einem zweiten Ende (48) des ersten Förderbands (36) gegenüber dem Kipper (8) eine erste Saugdüse (60) platziert ist, die mit einer Schereneinheit (64) ausgestattet ist, wobei diese erste Saugdüse (60) so ausgestaltet ist, dass sie die abgewickelten Enden der fallenden Spulen (12) ansaugt und ihr Abschneiden mittels der Schereneinheit (64) ermöglicht.

11. Spulenladevorrichtung (4) nach Anspruch 10, wobei die erste Saugdüse (60) auf einer ersten Rutsche (68) platziert ist, die sich zum zweiten Ende (48) des ersten Förderbands (36) benachbart befindet.

12. Spulenladevorrichtung (4) nach Anspruch 11, wobei die erste Rutsche (68) mit einem ersten gekerbten Profil (72') ausgestattet ist, um das Greifen der abgewickelten Enden der Spulen (12) zu erleichtern.

13. Spulenladevorrichtung (4) nach einem beliebigen der Ansprüche 1 bis 12, wobei das zweite Förderband (40) so angeordnet ist, dass es mit einem zweiten Ende (48) des ersten Förderbands (36) ausgerichtet ist, von dem die Spulen (12) herunterfallen, sodass die Spulen (12), die vom ersten Förderband (36) herunterfallen, aufgefangen und zu dessen einem Ausgabeende (76) geleitet werden.

14. Spulenladevorrichtung (4) nach einem beliebigen der Ansprüche 1 bis 13, wobei das zweite Förderband (40) mit mindestens einer Führung (80) ausgestattet ist, die auf der Seite eines Eingabeendes (84) der zweiten Vorschubausrichtung (S2) entgegengesetzt platziert ist.

15. Spulenladevorrichtung (4) nach einem beliebigen der Ansprüche 1 bis 14, wobei das zweite Förderband (40) mit zweiten Kippmitteln (88) ausgestattet ist, die geeignet sind, seine Neigung in Bezug auf den Bandförderer (16) zu ändern.

16. Spulenladevorrichtung (4) nach einem beliebigen der Ansprüche 1 bis 15, wobei an einem Ausgabeende (76) des zweiten Förderbands (40), das dem Kipper (8) zugewandt ist, eine zweite Saugdüse (92) platziert ist, die mit einer Schereneinheit (64) ausgerüstet ist, wobei die zweite Saugdüse (92) so ausgestaltet ist, dass sie die abgewickelten Enden der fallenden Spulen (12) ansaugt und ihr Abschneiden mittels der Schereneinheit (64) ermöglicht.

17. Spulenladevorrichtung (4) nach Anspruch 16, wobei sich die zweite Saugdüse (92) auf einer zweiten Rutsche (96) zum Ausgabeende (76) des zweiten Förderbandes (40) benachbart befindet.

18. Spulenladevorrichtung (4) nach Anspruch 17, wobei die zweite Rutsche (96) mit einem zweiten gekerbten Profil (72") ausgestattet ist, um das Greifen der abgewickelten Enden der Spulen (12) zu erleichtern.

19. Spulenladevorrichtung (4) nach einem beliebigen der Ansprüche 1 bis 18, wobei der Bandförderer (16) so angeordnet ist, dass er mit einem Ausgabeende (76) des zweiten Förderbands (40) in Übereinstimmung mit der zweiten Vorschubausrichtung (S2) ausgerichtet ist, um die aus dem Ausgabeende (76) fallenden Spulen (12) aufzunehmen.

20. Spulenladevorrichtung (4) nach einem beliebigen der Ansprüche 1 bis 19, wobei der Bandförderer (16) mit einem Schutz (80) ausgestattet ist, der in der Nähe des Fallpunkts der Spulen (12) vom zweiten Förderband (40) platziert ist.

21. Spulenladevorrichtung (4) nach einem beliebigen der Ansprüche 1 bis 20, wobei an einem Zufuhrende (100) des Bandförderers (16) eine dritte Saugdüse (104) platziert ist, die mit einer Schereneinheit (64) ausgerüstet ist, wobei diese dritte Saugdüse (104) so ausgestaltet ist, dass sie die abgewickelten Enden der fallenden Spulen (12) ansaugt und ihr Abschneiden mittels der Schereneinheit (64) ermöglicht.

22. Spulenladevorrichtung (4) nach Anspruch 21, wobei die dritte Saugdüse (104) auf einer dritten Rutsche (108) platziert ist, die sich zum Zufuhrende (100) des Bandförderers (16) benachbart befindet.

23. Spulenladevorrichtung (4) nach Anspruch 22, wobei die dritte Rutsche (108) mit einem dritten gekerbten Profil (72''') ausgestattet ist, um das Greifen der abgewickelten Enden der Spulen (12) zu erleichtern.

24. Spulenladevorrichtung (4) nach einem beliebigen der Ansprüche 1 bis 23, wobei die Vorrichtung (4) mit Sensoren (110) für das Betätigen und/oder das Bewegen und Kippen des Kippers (8), des ersten Förderbands (36), des zweiten Förderbands (40) und des Bandförderers (16) versehen ist, wobei die Sensoren (110) mit einer Steuer- bzw. Regeleinheit der Vorrichtung (4) betriebsfähig verbunden sind.

25. Textilmaschine, die eine Spulenladevorrichtung (4) gemäß einem beliebigen der Ansprüche 1 bis 24 umfasst.

## Revendications

1. Dispositif chargeur de bobines (4) pour machines textiles, comprenant
- un basculeur (8) contenant une pluralité de bobines (12),
- un convoyeur à bande (16) placé sous le basculeur (8) afin de recevoir les bobines (12) qui tombent du basculeur (8) et de les envoyer dans une direction d'alimentation (X-X) conformément à une orientation d'alimentation (F) et à une vitesse d'alimentation (Vf)
- un carrousel classificateur (28) adéquat pour classer les bobines (12), ledit carrousel classificateur (28) étant placé en aval du convoyeur à bande (16) afin de recevoir en provenance de celui-ci les bobines (12) à classer,
- dans lequel le dispositif chargeur de bobines (4) comprend entre le basculeur (8) et le convoyeur à bande (16) des moyens de dilution (32) adéquats pour diviser et espacer les bobines (12) en provenance du basculeur (8) les unes des autres, avant de les envoyer vers ledit convoyeur à bande (16),
dans lequel lesdits moyens de dilution (32) comprennent une première bande de convoyeur (36) placée sous le basculeur (8) afin de recevoir les bobines (12) tombant de celui-ci, possédant une première orientation de progression (S1) qui coïncide avec l'orientation d'alimentation (F) et une première vitesse de progression (V1), **caractérisé en ce que** lesdits moyens de dilution (32) comprennent en outre une seconde bande de convoyeur (40) placée entre la première bande de convoyeur (36) et le convoyeur à bande (16) afin de recevoir les bobines (12) tombant de la première bande de convoyeur (36) et de les canaliser sur le convoyeur à bande (16), la seconde bande de convoyeur (40) possédant une seconde orientation de progression (S2), opposée à l'orientation d'alimentation (F), et une seconde vitesse de progression (V2).

2. Dispositif chargeur de bobines (4) selon la revendication 1, dans lequel la première vitesse de progression (V1), la seconde vitesse de progression (V2) et la vitesse d'alimentation (Vf) augmentent progressivement.

3. Dispositif chargeur de bobines (4) selon la revendication 2, dans lequel lesdites vitesses (V1, V2, Vf) augmentent progressivement de l'une à l'autre à une cadence entre 20 % et 40 %.

4. Dispositif chargeur de bobines (4) selon la revendication 2 ou 3, dans lequel ladite cadence est de 30 %.

5. Dispositif chargeur de bobines (4) selon l'une quelconque des revendications 1 à 4, dans lequel lesdites bandes de convoyeur (36, 40) et ledit convoyeur à bande (16) sont entraînés par des moyens motorisés séparés.

6. Dispositif chargeur de bobines (4) selon l'une quelconque des revendications 1 à 5, dans lequel lesdites bandes de convoyeur (36, 40) et/ou ledit convoyeur à bande (16) sont équipés d'un revêtement en caoutchouc.

7. Dispositif chargeur de bobines (4) selon l'une quelconque des revendications 1 à 6, dans lequel la première bande de convoyeur (36) est inclinée vers le haut, possédant une première extrémité (44) abaissée, qui fait face au basculeur (8), et une seconde extrémité (48) relevée, opposée à la première extrémité abaissée (44).

8. Dispositif chargeur de bobines (4) selon l'une quelconque des revendications 1 à 7, dans lequel la première bande de convoyeur (36) possède des premiers moyens d'inclinaison (52) adéquats pour modifier son inclinaison par rapport au convoyeur à bande (16).

9. Dispositif chargeur de bobines (4) selon l'une quelconque des revendications 1 à 8, dans lequel la première bande de convoyeur (36) possède des reliefs en escalier (56) afin de faciliter le levage des bobines (12) tombant du basculeur (8).

10. Dispositif chargeur de bobines (4) selon l'une quelconque des revendications 1 à 9, dans lequel, au niveau d'une seconde extrémité (48) de la première bande de convoyeur (36), opposée au basculeur (8), est placée une première buse d'aspiration (60) équipée d'une unité à ciseaux (64), ladite première buse d'aspiration (60) étant configurée pour aspirer des extrémités non enroulées des bobines (12) qui tombent et permettre leur découpe par ladite unité à ciseaux (64).

11. Dispositif chargeur de bobines (4) selon la revendication 10, dans lequel la première buse d'aspiration (60) est placée sur une première goulotte (68) située de manière adjacente à la seconde extrémité (48) de la première bande de convoyeur (36).

12. Dispositif chargeur de bobines (4) selon la revendication 11, dans lequel la première goulotte (68) est équipée d'un premier profil cranté (72') pour faciliter la préhension des extrémités non enroulées des bobines (12).

13. Dispositif chargeur de bobines (4) selon l'une quelconque des revendications 1 à 12, dans lequel la seconde bande de convoyeur (40) est agencée de façon à être alignée avec une seconde extrémité (48) de la première bande de convoyeur (36) d'où les bobines (12) tombent, de façon à attraper les bobines (12) qui tombent de la première bande de convoyeur (36) et à les canaliser vers une extrémité de sortie (76) de celle-ci.

14. Dispositif chargeur de bobines (4) selon l'une quelconque des revendications 1 à 13, dans lequel la seconde bande de convoyeur (40) est équipée d'au moins une protection (80), placée sur le côté d'une extrémité d'entrée (84) opposée à la seconde orientation de progression (S2).

15. Dispositif chargeur de bobines (4) selon l'une quelconque des revendications 1 à 14, dans lequel la seconde bande de convoyeur (40) est ajustée avec des seconds moyens d'inclinaison (88) adéquats pour modifier son inclinaison par rapport au convoyeur à bande (16).

16. Dispositif chargeur de bobines (4) selon l'une quelconque des revendications 1 à 15, dans lequel, au niveau d'une extrémité de sortie (76) de la seconde bande de convoyeur (40), qui fait face au basculeur (8), est placée une deuxième buse d'aspiration (92) équipée d'une unité à ciseaux (64), ladite deuxième buse d'aspiration (92) étant configurée pour aspirer des extrémités non enroulées des bobines (12) qui tombent et permettre leur découpe par l'unité à ciseaux (64).

17. Dispositif chargeur de bobines (4) selon la revendication 16, dans lequel la deuxième buse d'aspiration (92) est placée sur une deuxième goulotte (96) située de manière adjacente à l'extrémité de sortie (76) de la seconde bande de convoyeur (40).

18. Dispositif chargeur de bobines (4) selon la revendication 17, dans lequel la deuxième goulotte (96) est équipée d'un second profil cranté (72") pour faciliter la préhension des extrémités non enroulées des bobines (12).

19. Dispositif chargeur de bobines (4) selon l'une quelconque des revendications 1 à 18, dans lequel le convoyeur à bande (16) est agencé de façon à être aligné avec une extrémité de sortie (76) de la seconde bande de convoyeur (40) qui coïncide avec la seconde orientation de progression (S2), de façon à recevoir les bobines (12) qui tombent depuis ladite extrémité de sortie (76).

20. Dispositif chargeur de bobines (4) selon l'une quelconque des revendications 1 à 19, dans lequel le convoyeur à bande (16) est équipé d'une protection (80) placée près du point de chute des bobines (12) en provenance de la seconde bande de convoyeur (40).

21. Dispositif chargeur de bobines (4) selon l'une quelconque des revendications 1 à 20, dans lequel, au niveau d'une extrémité d'alimentation (100) du convoyeur à bande (16), est placée une troisième buse d'aspiration (104) équipée d'une unité à ciseaux (64), ladite troisième buse d'aspiration (104) étant configurée pour aspirer des extrémités non enroulées des bobines (12) qui tombent et permettre leur découpe par l'unité à ciseaux (64).

22. Dispositif chargeur de bobines (4) selon la revendication 21, dans lequel ladite troisième buse d'aspiration (104) est placée sur une troisième goulotte (108) située de manière adjacente à l'extrémité d'alimentation (100) du convoyeur à bande (16).

23. Dispositif chargeur de bobines (4) selon la revendication 22, dans lequel la troisième goulotte (108) est équipée d'un troisième profil cranté (72'") pour faciliter la préhension des extrémités non enroulées des bobines (12).

24. Dispositif chargeur de bobines (4) selon l'une quelconque des revendications 1 à 23, dans lequel le dispositif (4) est équipé de capteurs (110) pour l'activation et/ou le mouvement et l'inclinaison du basculeur (8), de la première bande de convoyeur (36), de la seconde bande de convoyeur (40) et du convoyeur à bande (16), lesdits capteurs (110) étant connectés de manière opérationnelle à une unité de commande du dispositif (4).

25. Machine textile comprenant un dispositif chargeur de bobines (4) selon l'une quelconque des revendications 1 à 24.
